Europäisches Patentamt

European Patent Office

Office européen des brevets

(11) Numéro de publication: **0 274 310 B1**

(12) **FASCICULE DE BREVET EUROPEEN**

(45) Date de publication de fascicule du brevet:
**12.06.91**

(21) Numéro de dépôt: **87402771.7**

(22) Date de dépôt: **04.12.87**

(51) Int. Cl.⁵: **A47L 11/40, B65H 75/40**

(54) **Unité mobile autoguidée et appareil de nettoyage tel qu'un aspirateur comportant une telle unité.**

(30) Priorité: **11.12.86 FR 8617356**
       **08.09.87 FR 8712577**

(43) Date de publication de la demande:
**13.07.88 Bulletin 88/28**

(45) Mention de la délivrance du brevet:
**12.06.91 Bulletin 91/24**

(84) Etats contractants désignés:
**AT BE CH DE ES FR GB GR IT LI LU NL SE**

(56) Documents cités:
**DE-A- 2 251 271**
**FR-A- 2 279 145**
**US-A- 4 503 581**

(73) Titulaire: **Jonas, André**
**31, chemin du Colombier**
**F-06650 Le Rouret(FR)**

Titulaire: **Jonas, Bernard**
**29, Chemin du Colombier**
**F-06650 Le Rouret(FR)**

(72) Inventeur: **Jonas, André**
**31, chemin du Colombier**
**F-06650 Le Rouret(FR)**
Inventeur: **Jonas, Bernard**
**29, Chemin du Colombier**
**F-06650 Le Rouret(FR)**

(74) Mandataire: **Nony, Michel et al**
**Cabinet NONY & CIE, 29, rue Cambacérès**
**F-75008 Paris(FR)**

## Description

La présente invention concerne en premier lieu une unité mobile autoguidée.

On a déjà proposé de telles unités mobiles, associées généralement à des robots, destinées à se déplacer dans un environnement inconnu à priori, que ce soit à l'intérieur d'un local ou en extérieur. Ces unités nécessitent généralement la mise en oeuvre de moyens électroniques et informatiques considérables destinés notamment à la reconnaissance de cet environnement.

Il en résulte des coûts qui les rendent inaptes à de très nombreuses applications, notamment ménagères dans le domaine du nettoyage des locaux domestiques ou industriels. Or il existe une demande certaine pour de tels appareils pouvant exécuter automatiquement des tâches ingrates telles que celles du nettoyage de locaux.

On connait également par le document FR-A-2 279 145 un véhicule comprenant les caractéristiques du préambule de la revendication 1. Ce véhicule nécessite toutefois l'implantation sur les guides d'une ligne de guidage.

La présente invention vise à pallier ces inconvénients pour fournir une telle unité d'un coût très faible, susceptible de constituer notamment le corps d'un appareil de nettoyage automatique.

A cet effet l'invention a tout d'abord pour objet une unité mobile selon la revendication 1.

L'unité mobile selon l'invention peut par conséquent être réalisée très simplement et notamment n'employer, si on le désire, que des moyens mécaniques ou électriques. L'organe d'avance et de direction, par exemple une roue orientable, peut être entraîné en continu toujours dans le même sens. On a constaté que, d'une façon surprenante, il suffisait d'orienter cet organe d'avance et de direction dans un sens ou dans l'autre en fonction de la réaction exercée sur les moyens de détection pour que l'unité mobile longe ses guides qui, dans le cas d'un appareil de nettoyage, sont simplement constitués par les murs et le mobilier du local à nettoyer. Une telle unité mobile est en particulier capable de sortir de toute impasse dans laquelle elle a pu s'engager.

Afin d'éviter une trop grande instabilité directionnelle, on peut agencer les moyens de commande de manière à inhiber les moyens d'orientation en présence d'une réaction sur les moyens de détection comprise entre ledit premier seuil prédéterminé et un deuxième seuil prédéterminé.

Dans ce cas, en l'absence d'une perturbation extérieure, l'unité mobile peut longer un guide rectiligne avec son organe d'avance et de direction en position neutre. Les moyens d'orientation n'entrent en fonctionnement que lorsque l'unité mobile s'écarte du guide auquel cas la réaction diminue, ou lorsqu'elle s'appuie trop fortement sur le guide, auquel cas la réaction augmente. Dans le premier cas les moyens d'orientation orientent l'organe d'avance et de direction de manière à ramener l'unité mobile vers son guide, et, dans le deuxième cas, les moyens d'orientation orientent l'organe d'avance et de direction de manière à l'écarter du guide. Bien entendu les moyens d'orientation entrent également en fonctionnnement lors de la rencontre d'un obstacle.

De préférence à une commande par tout ou rien de l'orientation de l'organe d'avance et de direction, on prévoit une commande proportionnelle, dans laquelle lesdits moyens d'orientation comprennent un moteur électrique, et lesdits moyens de commande comprennent un premier interrupteur agencé pour commander la rotation du moteur électrique dans ledit premier sens, un deuxième interrupteur agencé pour commander la rotation du moteur électrique dans ledit deuxième sens, et des moyens de transmission pour transmettre la réaction exercée sur les moyens de détection à un organe d'actionnement desdits interrupteurs.

Dans ce cas, lesdits moyens de transmission peuvent comprendre un organe de manoeuvre solidaire en translation horizontale desdits moyens de détection, et susceptible de coulisser par rapport au châssis d'avant en arrière par rapport à la direction générale d'avance de l'unité mobile, d'une position avant où il enclenche ledit premier interrupteur à une position arrière où il enclenche ledit deuxième interrupteur, des moyens élastiques étant prévus pour presser ledit organe de manoeuvre vers sa position avant.

On comprend que ces moyens élastiques fournissent la valeur du ou des seuils de réaction précités. Dans le cas où l'organe de manoeuvre se trouve dans sa position avant, c'est-à-dire dans le cas d'une réaction inférieure au seuil, ou encore, en d'autres termes, lorsque l'unité mobile tend à s'écarter de son guide, le premier interrupteur est enclenché. Le moteur électrique tourne alors dans le premier sens précité, ce qui a pour effet de faire pivoter l'organe d'avance et de direction dans le sens où il ramène l'unité mobile vers le guide. Dans le cas contraire où la réaction est supérieure au seuil, l'organe de manoeuvre coulisse vers sa position arrière et enclenche le deuxième interrupteur. Le moteur électrique tourne alors dans l'autre sens et fait pivoter l'organe d'avance et de direction dans le sens où il écarte l'unité mobile de son guide.

Dans un mode de réalisation particulier de l'invention, ledit organe de manoeuvre se présente sous la forme d'une structure triangulaire ayant son sommet dirigé vers l'arrière, et sa base dirigée vers l'avant et sensiblement perpendiculaire à la direction générale d'avance de l'unité mobile, les extrémités de la base ayant leurs mouvements limités vers l'avant, et au moins partiellement libres vers l'arrière et vers les côtés, le sommet pouvant se déplacer d'avant en arrière, et ladite structure pouvant pivoter autour dudit sommet.

On peut constater que, dans ces conditions, une action exercée sur les moyens de détection depuis le demi-espace avant de l'unité mobile se traduit généralement par une rotation de l'organe de manoeuvre autour de son sommet, cette rotation engendrant à son tour un recul de ce sommet, du fait de l'impossibilité pour les extrémités de la base de se déplacer vers l'avant et de l'indéformabilité de la structure triangulaire.

Un tel agencement peut notamment être réalisé en montant le sommet et les deux extrémités de la base de la structure triangulaire aux trois extrémités de trois tiges relativement souples sensiblement verticales, ayant chacune leur autre extrémité montée sur le châssis.

Plus particulièrement, chacune de ces tiges peut être engagée dans un tube de structure monté sur ledit châssis, lesdits tubes ayant des dimensions intérieures largement supérieures au diamètre des tiges et l'un au moins desdits tubes étant agencé pour supporter lesdits interrupteurs.

Dans un mode de réalisation particulier de l'invention, les moyens de détection comprennent un pare-chocs disposé à la périphérie inférieure de l'unité et constituant ledit organe de manoeuvre.

Ce pare-chocs permet de détecter des objets bas, tels par exemple qu'un pied de lampe.

On peut en outre prévoir une enveloppe cylindrique à axe sensiblement vertical montée pivotante le long de sa périphérie inférieure sur ledit pare-chocs.

Cette enveloppe cylindrique ne comportant pas dans ce mode de réalisation, de plateau supérieur, le couvercle de l'unité mobile selon l'invention peut être rendu solidaire de son châssis.

Comme cela a déjà été mentionné, l'organe d'avance et de direction peut être constitué par une roue. Dans ce cas, cette roue a de préférence son axe sensiblement horizontal situé dans un plan décalé en arrière dudit axe vertical d'orientation lorsque la roue est dans sa position normale d'avance.

Il résulte de cet agencement une caractéristique de fonctionnement particulièrement intéressante de l'unité mobile selon l'invention. On constate en effet que, lorsque l'unité mobile s'écarte de son guide, le seul mouvement d'orientation de la roue la ramène vers ce guide indépendamment même de son mouvement d'avance. On peut ainsi limiter au strict minimum le temps de réponse du dispositif.

Dans un mode de réalisation avantageux, lesdits moyens de détection comprennent un capot cylindrique à axe vertical, pivotant par rapport audit axe.

Ce capot assure d'une part la protection des organes de l'unité mobile, et d'autre part, du fait de sa forme cylindrique et de sa possibilité de pivoter autour de son axe, il roule sans frotter le long du guide. Dans le cas d'un appareil de nettoyage on évite ainsi d'endommager les murs et le mobilier.

Ce capot cylindrique peut en particulier être monté pivotant sur l'organe de manoeuvre mentionné ci-dessus.

Afin d'assurer l'alimentation électrique de l'unité mobile sans que le câble d'alimentation ne gêne son fonctionnement, on peut prévoir un enrouleur pour ce câble, une perche dépassant de la surface supérieure de ladite unité et dont l'extrémité supérieure est agencée pour le passage dudit câble, et des moyens de guidage pour guider le câble de l'extrémité de ladite perche audit enrouleur.

Ainsi, le câble d'alimentation est toujours tendu au dessus de l'unité mobile.

La présente invention a également pour objet un appareil de nettoyage tel qu'un aspirateur, caractérisé par le fait qu'il comporte un corps constitué d'une unité mobile telle que décrite ci-dessus.

Cet appareil de nettoyage peut comprendre un organe de nettoyage tel qu'un suceur d'aspirateur, des moyens de balayage pour déplacer ledit organe sur le sol sensiblement perpendiculairement à la direction générale d'avance de l'unité mobile, de manière à balayer une bande sol d'une largeur prédéterminée, et des moyens de démarrage et d'arrêt pour provoquer l'avance de l'unité mobile sur une distance au plus égale à ladite largeur prédéterminée, son arrêt pendant le balayage de ladite bande de sol, et son redémarrage subséquent.

La tâche de nettoyage est ainsi exécutée par bandes adjacentes ou se recouvrant légèrement pendant les périodes d'arrêt de l'unité mobile. Ces bandes partent sensiblement du guide pour s'en éloigner, de sorte que toute la surface au sol du local est peu à peu nettoyée. Il suffit en effet pour cela que les moyens de balayage puissent amener l'organe de nettoyage à une distance de l'unité mobile au moins égale à la moitié de la plus grande dimension du local.

Dans un mode de réalisation particulier de l'invention, les moyens d'arrêt et de démarrage comprennent une came montée sur les moyens d'entraînement, susceptible de coopérer avec l'organe d'actionnement d'un commutateur de commande d'un relais, ledit relais étant agencé pour alimenter sélectivement, soit les moyens d'entraînement et les moyens d'orientation, soit les moyens de balayage.

Lesdits moyens d'arrêt et de démarrage et lesdits moyens de balayage peuvent notamment être agencés pour coopérer avec des interrupteurs de fin de course, pour provoquer le déploiement de l'organe de nettoyage lors de l'arrêt de l'unité mobile, pour provoquer son repliement lorsqu'il est arrrivé en fin de course déployée, et pour provoquer le redémarrage de l'unité mobile lorsque l'organe de nettoyage est arrivé en fin de course repliée.

Lesdits moyens de balayage peuvent comprendre un tube semi-rigide susceptible de s'enrouler vers le haut dans un plan sensiblement vertical, un enrouleur disposé dans ledit plan, et des moyens de déroulement et d'enroulement dudit tube sur ledit enrouleur, ledit organe de nettoyage étant monté à l'extrémité libre dudit tube.

Cet agencement trouve plus particulièrement son application lorsque l'organe de nettoyage est un suceur d'aspirateur et que ledit tube est constitué par le tube d'aspiration.

Généralement, l'enrouleur est disposé dans un plan vertical perpendiculaire à la direction générale d'avance de l'unité mobile, de manière à déplacer l'organe de nettoyage plus ou moins perpendiculairement au guide de l'unité mobile. On remarquera que, dans ce cas, le déploiement du tube ne peut se faire que dans un seul sens par rapport à la direction générale d'avance, c'est-à-dire soit sur la droite, soit sur la gauche de l'unité mobile. Généralement, on disposera l'unité mobile de sorte qu'elle avance avec son guide du côté opposé au déploiement des moyens de balayage. Le nettoyage s'effectuera ainsi vers le centre de la pièce. On constate toutefois que dans ce cas les parties du sol situées sous des meubles de hauteur telle qu'ils ne permettent pas le passage de l'unité mobile, ne seront pas nettoyées. On prévoira dont d'effectuer occasionnellement des passages avec le guide situé de côté du déploiement des moyens de balayage.

On décrira plus loin des moyens à inverseur et à double interrupteur de fin de course pour les moyens d'orientation, permettant à l'unité mobile de longer son guide au choix de l'utilisateur à droite ou à gauche.

On remarquera par ailleurs que le tube semi-rigide précité doit présenter une rigidité suffisante pour empêcher son flambage sous l'effet des moyens de balayage tout en permettant son enroulement dans un plan. A cet effet, ce tube peut être armé d'une lame métallique élastique.

Les moyens de déroulement et d'enroulement peuvent comprendre une bande sans fin motorisée et munie de picots à sa surface extérieure, lesdits picots étant agencés pour coopérer avec des trous formés à la surface extérieure dudit tube, par exemple dans la lame métallique précitée.

Selon un autre mode de réalisation, les moyens de déroulement et d'enroulement du tube comprennent une bande souple, par exemple métallique, fixée à une de ses extrémités audit enrouleur et à son autre extrémité à un tambour motorisé.

Cette bande souple peut par exemple être enroulée sur l'enrouleur en étant superposée audit tube.

Dans le cas d'un aspirateur, on prévoit avantageusement, à la partie inférieure de l'unité mobile, une trémie munie d'une première fente transversale à la direction générale d'avance à proximité du sol, et d'une deuxième fente contre laquelle s'applique l'orifice du suceur lorsque ce dernier est en position repliée.

On assure ainsi le nettoyage de la bande de sol adjacente à la partie inférieure du guide, par exemple le long des murs. Ce nettoyage s'effectue pendant les phases de déplacement de l'unité mobile, par l'intermédiaire de la fente transversale, puisque l'orifice du suceur est généralement constituée par une fente sensiblement parallèle à la direction d'avance de l'unité mobile.

On décrira maintenant à titre d'exemple non limitatif, des modes de réalisation particulier de l'invention en référence aux dessins schématiques annexés dans lesquels :

- la figure 1 est une vue en coupe axiale, verticale, d'un aspirateur auto-guidé selon l'invention, selon un plan parallèle à sa direction générale d'avance,
- la figure 2 en est une coupe horizontale,
- la figure 3 est une vue en coupe, selon la ligne III-III de la figure 4,
- la figure 4 est une vue de dessus partielle à plus grande échelle de l'aspirateur des figures 1 et 2,
- la figure 5 est une vue partiellement en coupe verticale de la roue d'avance et de direction de cet aspirateur,
- la figure 6 est une vue de dessus partielle correspondant à la figure 5,
- les figures 7 et 8 sont des vues de dessus correspondant à la figure 5 avec la roue d'avance et de direction dans ses orientations extrêmes à droite et à gauche respectivement, pour le mode de fonctionnement "mur à droite",
- la figure 9 est une vue de côté des moyens de balayage,
- la figure 10 est une vue en coupe selon la ligne X-X de la figure 9,
- la figure 11 est une vue de dessous de la figure 10,
- la figure 12 est un schéma électrique de l'aspirateur des figures précédentes,
- les figures 13 et 14 illustrent le fonctionnement du capot de détection de cet aspirateur,
- les figures 15 à 18 illustrent le fonctionnement du triangle de manoeuvre,

- la figure 19 représente un exemple de cheminement de l'aspirateur selon l'invention,
- la figure 20 est une vue en coupe horizontale selon la ligne XX-XX de la figure 21 d'une unité mobile selon l'invention, selon un autre mode de réalisation,
- la figure 21 est une vue en coupe selon la ligne XXI-XXI de la figure 20,
- la figure 22 est une vue de côté d'un enrouleur selon un autre mode de réalisation de l'invention,
- la figure 23 est une vue en coupe selon la ligne XXIII-XXIII de la figure 22,
- la figure 24 est une vue à plus grande échelle du détail XXIV de la figure 22, et
- la figure 25 représente le tambour d'enroulement de la figure 24.

L'aspirateur représenté aux dessins dont la direction générale d'avance est représentée par la flèche F1, comprend un châssis 1 supporté sur le sol par deux roulettes arrière 2 montées folles sur leur axe et fixes en orientation, et une roue avant 3 d'avance et de direction.

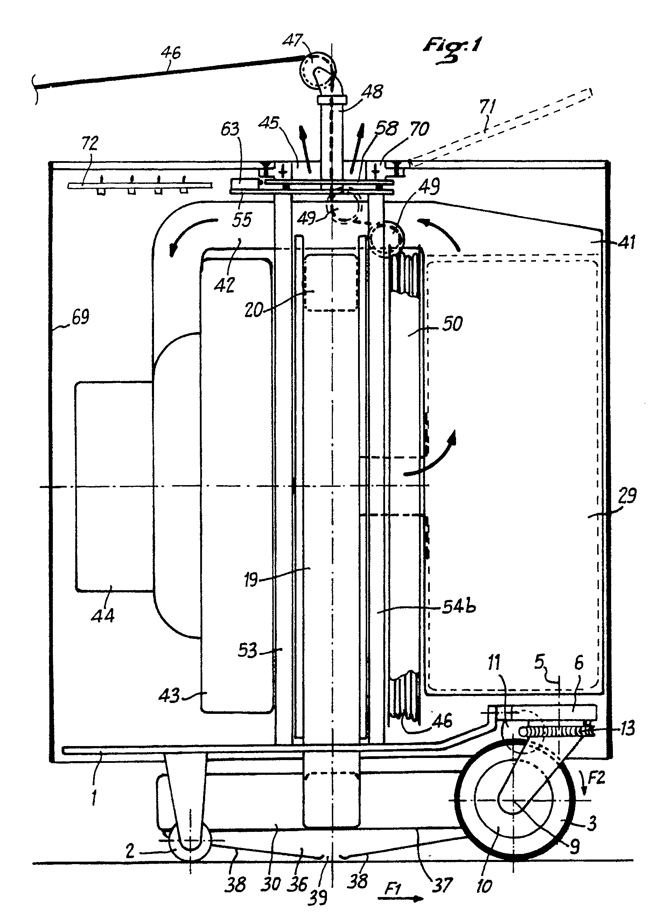

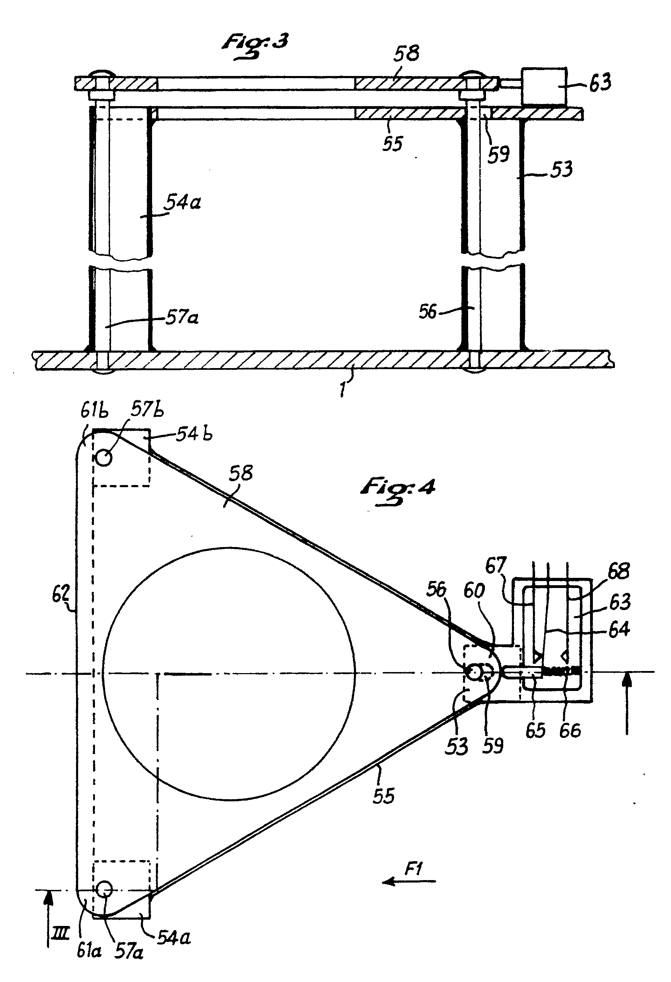

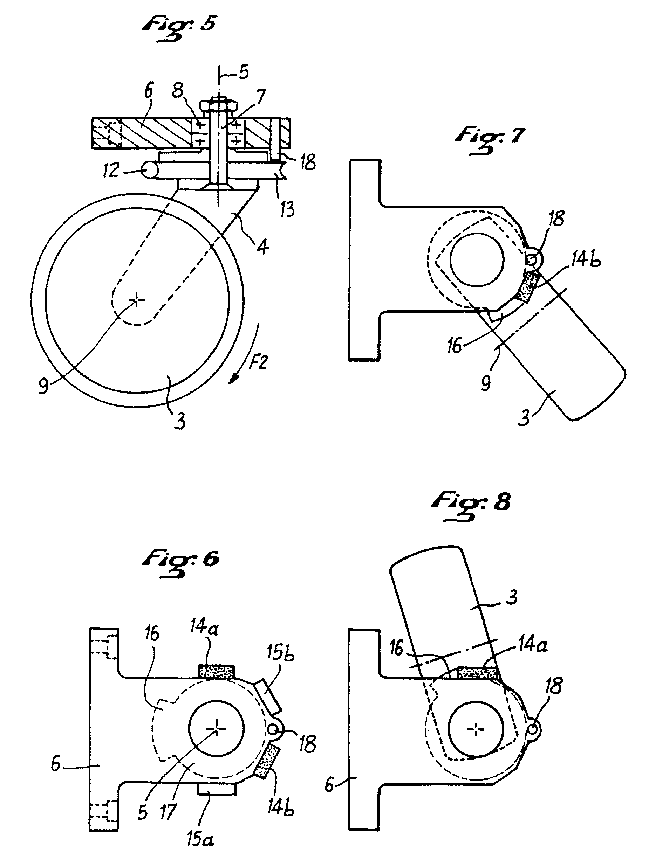

La roue 3 est montée sur une fourche 4 pivotante autour d'un axe 5 par rapport à une pièce de montage 6 solidaire du châssis 1 (figure 5). A cet effet, la fourche 4 est reliée à la pièce de support 6 à l'aide d'un arbre 7 par l'intermédiaire de roulements à billes 8. Lorsque la roue 3 est dans sa position neutre représentée aux figures 1, 3 et 5, son axe de rotation horizontal 9 se trouve en arrière de son axe de pivotement vertical 5 par rapport à la direction F1.

La roue 3 est entraînée autour de son axe 9 dans le sens de la flèche F2 à l'aide d'un moteur 10 logé dans son moyeu.

Par ailleurs, l'orientation de la roue 3 autour de son axe 5 est commandée par un moteur 11 monté sur le châssis 1, et dont l'arbre de sortie est constitué par une vis sans fin 12 coopérant avec une roue dentée 13 clavetée sur l'arbre 7.

Deux paires d'interrupteurs de fin de course 14a et 14b d'une part, et 15a et 15b d'autre part (figure 6), dont la fonction sera décrite ci-après, sont montés sur la pièce de support 6. Ces interrupteurs sont agencés pour coopérer avec une saillie 16 d'une pièce 17 solidaire en pivotement de la fourche 4. Les interrupteurs 14a et 15a d'une part, et 14b et 15b d'autre part sont montés symétriquement par rapport à l'axe de l'appareil, les interrupteurs 14a et 15a étant en arrière des interrupteurs 14b et 15b.

Un doigt de blocage de sécurité 18 est en outre monté sur la pièce 6, également pour coopérer avec la saillie 16, pour former une butée de sécurité destinée à empêcher, quoi qu'il arrive, un pivotement de la roue 3 autour de son axe 5 supérieur à un demi-tour.

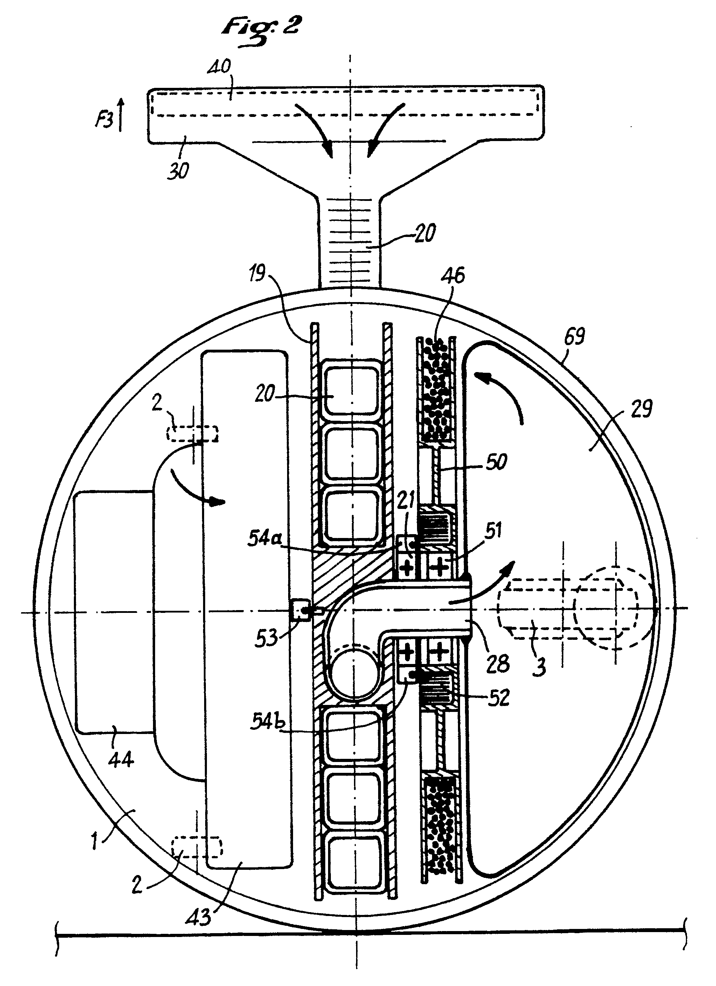

Le châssis 1 supporte également un enrouleur 19 pour un tube d'aspiration 20. L'enrouleur 19 est monté sur le châssis 1 dans un plan vertical perpendiculaire à la direction F1 par l'intermédiaire d'un roulement à bille 21 (figure 2).

Le tube 20 est à section transversale carrée et est annelé pour permettre son enroulement sur l'enrouleur 19. Il comporte par ailleurs à sa surface inférieure une lame métallique élastique 22 lui procurant une certaine rigidité longitudinale mais permettant son enroulement.

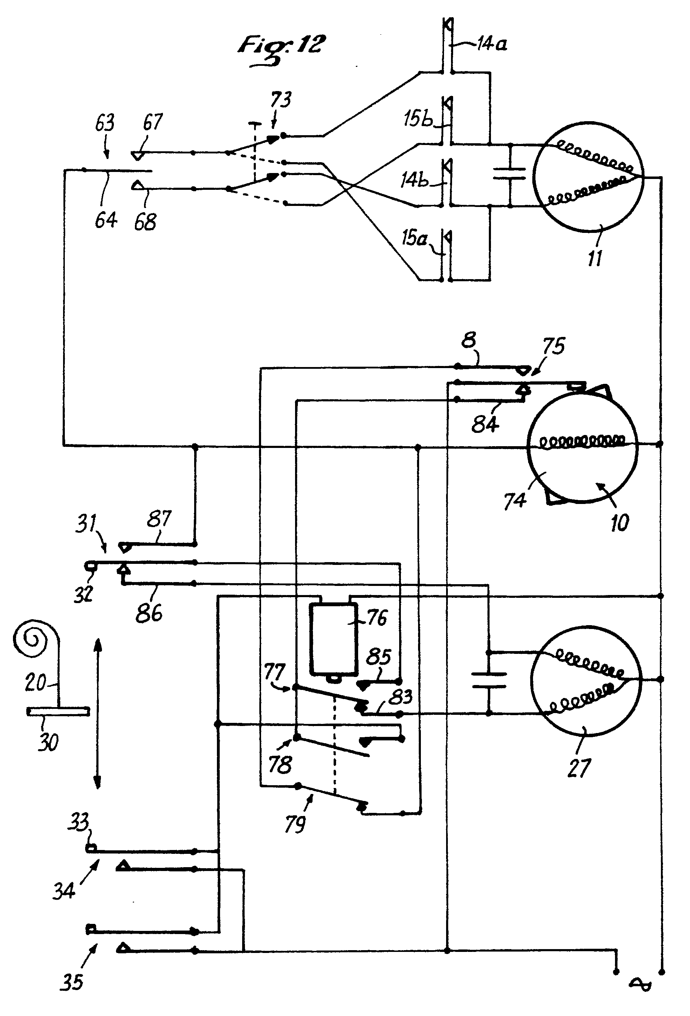

L'enrouleur 19 est monté fou sur son axe et l'entraînement du tube 20 dans un sens ou dans l'autre est réalisé à l'aide d'une bande sans fin 23 munie à sa surface extérieure de picots 24 susceptibles de s'engager dans des trous 25 de la lame métallique 22. Un guide supérieur 26 permet de maintenir le tube 20 appliqué contre la bande sans fin 23. Cette dernière est entraînée en rotation à l'aide d'un moteur 27 (figure 12).

A son extrémité reliée à l'enrouleur 19, le tube 20 pénètre par un conduit axial 28 dans un sac à poussières 29. A son extrémité libre, le tube 20 reçoit un suceur 30 d'un type adapté à la surface du sol qui doit être traité.

L'enrouleur 19 étant disposé perpendiculairement à la direction F1, le tube 20 peut se déployer dans le sens de la flèche F3 (figure 2) également perpendiculaire à F1, ou se replier dans le sens contraire, suivant le sens de rotation du moteur 27. Le suceur 30 décrit donc des bandes perpendiculaires à la direction F1.

Un interrupteur de fin de course repliée 31 a son contact mobile 32 susceptible d'être actionnée par le suceur 30 lorsque celui-ci arrive dans sa position complètement repliée. De même, le contact mobile 33 d'un interrupteur de fin de course déployée 34 est actionné par le suceur 30 lorsque ce dernier arrive dans sa position complètement déployée.

Un autre interrupteur 35 est monté sur le suceur 30 afin de détecter le contact d'un obstacle lors du déploiement du tube 20.

Une trémie 36 est par ailleurs montée à la partie inférieure du châssis 1. Cette trémie comporte, du côté du déploiement du tube 20, un plan incliné (non représenté) sur lequel est susceptible de monter le suceur 30 lorsqu'il arrive dans sa position complètement repliée. La trémie 36 comporte deux parois latérales parallèles à la direction F1, une paroi supérieure 37 et deux parois inférieures 38 délimitant entre elles une fente 39 à proximité immédiate du sol. La fente 39 est perpendiculaire à la direction F1 alors que la paroi supérieure 37 comporte une fente (non représentée) perpendiculaire à cette direction F1, et sur laquelle vient s'appliquer l'orifice 40 du suceur 30 lorsque ce dernier est dans sa position complètement repliée.

Le sac à poussières 29 est disposé dans un logement 41 relié par un conduit 42 à une turbine 43 entraînée par un moteur 44. L'air entraîné par l'orifice 40 du suceur 30, éventuellement par l'intermédiaire de la fente 39 et la trémie 36, se décharge de sa poussière dans le sac 29, puis traverse le conduit 42, pénètre dans la turbine 43, et est finalement évacué par un orifice 45 à la partie supérieure de l'appareil.

Les moteurs 10, 11, 27 et 44 sont alimentés par un câble électrique 46. Ce câble 46 passe sur une poulie 47 montée à l'extrémité supérieure d'une perche 48 orientable autour d'un axe vertical. Le câble 46 passe ensuite dans la perche 48 puis sur deux poulies de renvoi 49 jusqu'à un enrouleur 50.

L'enrouleur 50 est monté sur le châssis de l'appareil à l'aide d'un roulement à bille 51 coaxial au roulement 21, et est muni d'un ressort de rappel 52 permettant d'exercer en permanence une traction sur le câble 46, de manière à le maintenir tendue au dessus de l'appareil.

On constatera sur la figure 2 que l'enrouleur 19 est disposé dans un plan diamétral de l'appareil de manière à donner la plus grande longueur possible au tube 20, et que l'enrouleur 50 et la turbine 43 sont montés parallèlement à l'enrouleur 19 de part et d'autre de ce dernier. Il est ainsi possible de donner un grand diamètre à la turbine 43, ce qui permet d'assurer un fonctionnement silencieux de l'appareil.

On décrira maintenant plus particulièrement le système de commande de l'appareil.

Trois tubes à section carrée 53, 54a et 54b sont montés verticalement sur le châssis 1 et supportent à leur partie supérieure une platine 55. Les tubes 53, 54a et 54b délimitent en section horizontale un triangle dont le sommet constitué par le tube 53a est dirigé vers l'arrière de l'appareil, c'est-à-dire du côté opposé à la flèche F1, tandis que la base constituée par les tubes 54a et 54b est dirigée vers l'avant dans la direction de la flèche F1.

Trois tiges 56, 57a et 57b sont disposées dans les tubes 53, 54a et 54b respectivement. Les tiges ont un diamètre très largement inférieur à la section intérieure des tubes de manière à leur permettre un débattement suffisant. Elles sont montées à leur partie inférieure sur le châssis 1 et reçoivent à leur partie supérieure une structure triangulaire 58.

Les tubes 53, 54a et 54b ont chacun deux de leurs faces parallèles à la direction F1, et leurs deux autres faces perpendiculaires à cette direction. Les tiges 56, 57a et 57b sont montées à leur partie inférieure de manière à se trouver pratiquement en contact avec les faces avant (dans la direction F1) des tubes 53, 54a et 54b, mais peuvent s'en écarter du fait de leur relative flexibilité à leur partie supérieure. Par ailleurs, les tiges 57a et 57b peuvent également glisser contre les faces avant des tubes 54a et 54b.

Par contre, la tige 56 peut uniquement s'écarter vers l'arrière de la face avant du tube 53 du fait qu'elle est guidée dans une fente longitudinale 59 ménagée dans la platine 55. Le sommet 60 et les extrémités 61a et 61b de la base 62 de la structure 58 suivent bien entendu les mouvements des extrémités supérieures des tiges 56, 57a et 57b respectivement.

Un commutateur à deux positions 63 est également monté sur la platine 55. Le contact mobile 64 de ce commutateur est actionné par un doigt 65 maintenu en appui contre le sommet 60 de la structure triangulaire 58 par un ressort 66. En l'absence d'effort exercé sur la structure 58, le ressort 66 maintient les tiges 56, 57a et 57b appliquées contre les faces avant des tubes par l'intermédiaire du doigt 55, de sorte que le contact mobile 64 est relié au contact fixe avant 67 du commutateur 63. Par contre, lorsque le doigt 65 est repoussé vers l'arrière par le sommet 60 de la structure 58 contre l'action du ressort 66, le contact mobile 64 passe par une position neutre puis se trouve relié au contact fixe arrière 68 du commutateur 63.

L'appareil selon l'invention comporte enfin un capot cylindrique 69 monté sur la structure triangulaire 58 par l'intermédiaire d'un roulement à bille 70. Ce capot comporte une trappe 71 permettant de donner accès, suivant la position angulaire du capot par rapport au châssis, soit au sac à poussières 29, soit à un tableau de commande 72 muni en particulier d'un interrupteur marche/arrêt, d'un variateur de débit de la turbine, d'une minuterie, et d'un inverseur "mur à droite/mur à gauche" 73 (figure 12) dont la fonction sera décrite ci-après.

On se réfèrera maintenant plus particulièrement au schéma électrique de la figure 12 dont un certain nombre d'éléments ont déjà été mentionnés ci-dessus à propos des organes auxquels ils sont fonctionnellement liés.

Les moteurs 10, 11 et 27 sont des moteurs asynchrones fonctionnant sur le courant alternatif du secteur. Le moteur 10 est agencé pour tourner toujours dans le même sens, alors que les moteurs 11 et 27 sont munis de façon conventionnelle de capacité, et de selfs permettant de choisir leur sens de démarrage.

Les contacts fixes 67 et 68 du commutateur 63 sont reliés respectivement, soit aux interrupteurs 14a et 14b, soit aux interrupteurs 15a et 15b, suivant la position de l'inverseur 73 qui, dans la figure, est dans sa position "mur à droite".

Par ailleurs, une came 74 a sa rotation liée à celle du moteur 10 de manière à actionner un commutateur à deux positions 75. Enfin, un relais triple a sa bobine 76 agencée pour actionner un commutateur à deux positions 77 et deux interrupteurs 78 et 79.

On décrira en détail les connexions entre les différents organes représentés à la figure 12 lors de l'explication ultérieure du fonctionnement du dispositif.

Si l'on se reporte maintenant aux figures 13 à 18, on constate sur la figure 15 que, aussi longtemps qu'aucun effort n'est exercé depuis l'avant sur la structure 58 par l'intermédiaire du capot 69, les tiges 56, 57a et 57b sont en appui sur les faces avant des tubes (figure 13), de sorte que le moteur 11 peut être alimenté par l'intermédiaire du contact mobile 64, du contact fixe 67, et de l'interrupteur 14a (dans le où l'inverseur 73 est dans la position représentée à la figure 12). Ainsi alimenté, le moteur 11 entraîne le pivotement de la roue 3 autour de l'axe 5 vers la position représentée à la figure 8. Si la roue 3 atteint cette position, l'interrupteur 14a est ouvert par la saillie 16, ce qui arrête le moteur. L'appareil atteint ainsi son braquage maximum tendant à l'amener vers le mur 80.

Si, au contraire, ce mur est atteint avant que l'interrupteur 14a soit ouvert, une pression est exercée sur le capot 79 et par conséquent sur la structure 58, dans le sens de la flèche F4 (figure 6), ce qui fait pivoter la structure 58 autour de la tige 56, la tige 57b restant en appui sur la face avant du tube 54b. Du fait de l'indéformabilité de la structure 58, cette rotation provoque un recul de la tige 56 de sorte que le sommet 60 de cette structure repousse le contact mobile 64 vers l'arrière contre l'action du ressort 66. Tant que le contact mobile reste entre les deux contacts fixes du commutateur 63, c'est-à-dire que tant la réaction sur le capot 69 reste modérée, le moteur 11 reste arrêté et la roue 3 reste dans la même position.

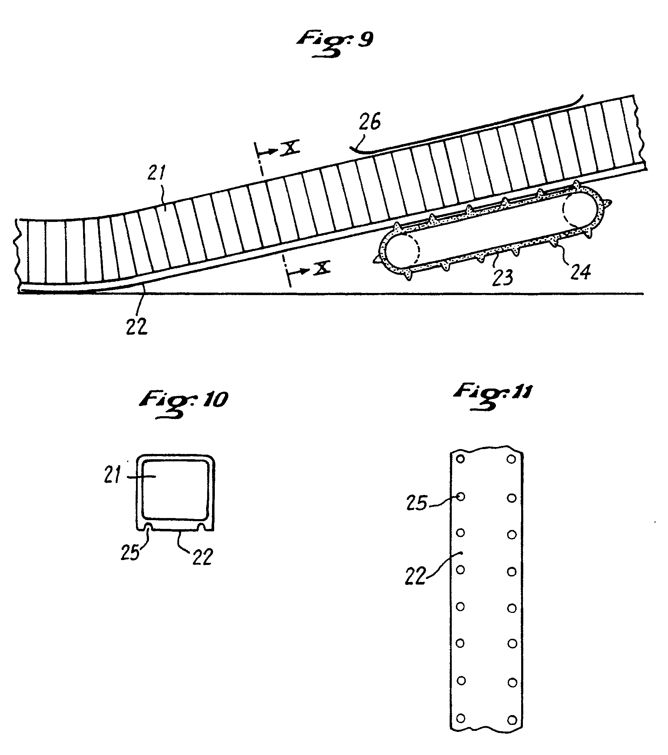

Si par contre l'effort F4 augmente, le contact mobile 64 vient alimenter le moteur 11 par l'intermédiaire du contact fixe 68 et de l'interrupteur 14b, ce qui amène le moteur 11 à faire pivoter la roue 3 vers sa position représentée à la figure 7.

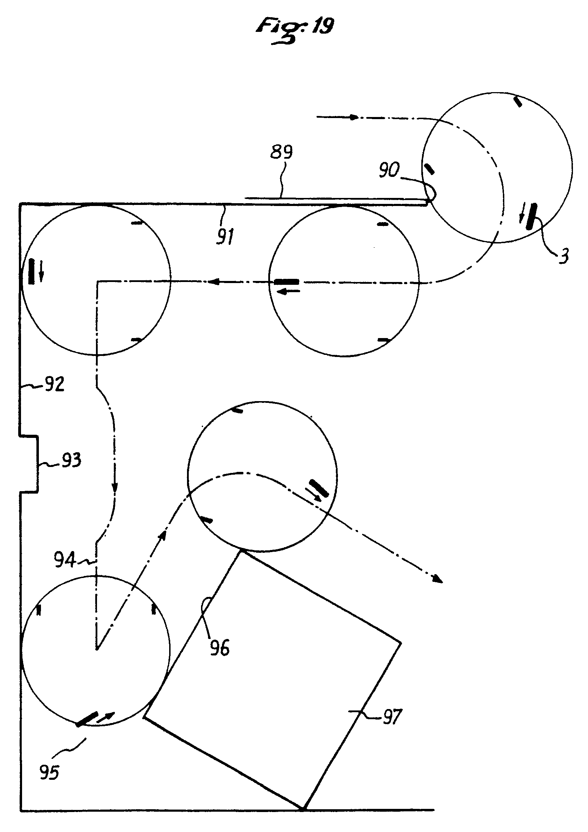

Si l'on remarque la dissymétrie des contacts 14a et 14b sur la figure 6, on constate que le rayon de braquage atteint dans la position de la figure 7 (débattement de la roue 3 supérieur à 90°) est très supérieur à celui atteint dans la figure 8 (débattement de la roue 3 inférieur à 90°). Lorsque l'appareil longe un mur sensiblement rectiligne comme sur les figures 15 et 16, le contact 14b ne sera généralement pas ouvert et la roue 3 oscillera de part et d'autre de sa position médiane. La position de la figure 8 ne sera atteinte que lors de la recherche d'un mur guide (décrite ci-dessus en référence à la figure 15) alors que la position de la figure 7 ne sera atteinte que dans le cas où il s'agira de sortir d'une impasse, comme cela sera décrit ci-après en référence à la figure 18.

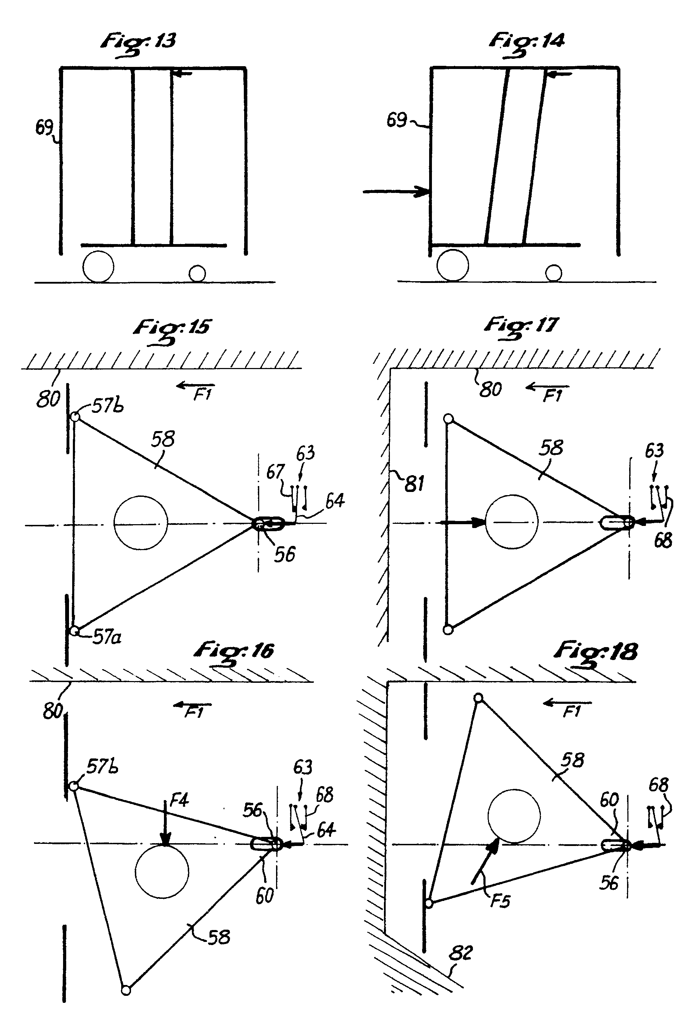

Si maintenant l'appareil rencontre un obstacle frontal (figures 14 et 17) la structure 58 est repoussée dans son ensemble vers l'arrière, de sorte que, là encore, le moteur sera alimenté par l'intermédiaire du contact fixe 68 du commutateur 63, et de l'interrupteur 14b. Le moteur 11 entraînera la roue 3 vers la position représentée à la figure 7 mais, lorsque la roue atteindra une orientation à 90° par rapport à la direction F1, l'appareil pivotera jusqu'à se placer parallèlement à l'obstacle (mur 81) le long duquel il poursuivra son cheminement.

Si enfin on se trouve dans la position d'impasse de la figure 18, le mur 82 repoussera le capot 69 et la structure triangulaire 58 dans le sens de la flèche F5 et le phénomène de rotation autour de la tige 56/translation vers l'arrière du sommet 60 décrit ci-dessus en référence à la figure 16 se produira, simplement inversé. Le moteur 11 sera toujours alimenté par l'intermédiaire du contact fixe 68 et de l'interrupteur 14b mais, du fait de la présence du mur 82, le pivotement de la roue pourra se produire jusqu'à la position de la figure 7. La roue 3 tournant toujours dans le même sens autour de son axe 9 aura alors tendance à ramener l'appareil vers l'arrière pour le faire sortir de l'impasse. On a constaté que cet agencement permettait à l'appareil de sortie de toute impasse dans laquelle il avait pu s'engager.

On a supposé jusqu'à présent que l'inverseur 73 était dans la position représentée à la figure 12, auquel cas l'appareil progresse avec le mur à droite. On constatera que, si l'inverseur est placé dans son autre position, le moteur 11 est alimenté par l'intermédiaire des interrupteurs de fin de course 15a et 15b de façon inversée, et que par conséquent l'appareil recherchera un mur à gauche et progressera ensuite avec ce mur à sa gauche.

Si l'on revient maintenant à la figure 12, on constatera qu'en fait le moteur d'avance 10 et le moteur d'orientation 11 ne sont pas alimentés, mais que par contre le moteur 27 est en train de déployer le tube 20 par l'intermédiaire du contact fixe 83 du commutateur 77. Lorsque le tube 20 arrive en fin de course, ou qu'on obstacle est rencontré par le suceur 20, l'interrupteur 34 ou l'interrupteur 35 respectivement est fermé, ce qui entraîne l'excitation de la bobine 76 du relais. Celui-ci est maintenu excité par l'intermédiaire de l'interrupteur 78 et du contact fixe 84 du commutateur 75, ce qui provoque l'inversion du sens de rotation du moteur 27, à travers le deuxième contact fixe 85 du commutateur 77 et le premier contact fixe 86 du commutateur 31.

Le tube 20 s'enroule alors sous l'action du moteur 27 jusqu'à actionner le contact mobile 32 du commutateur 31, ce qui arrête l'enroulement.

Par contre, le moteur 10 d'avance et le moteur 11 d'orientation sont alimentés par l'intermédiaire du deuxième contact fixe 87 du commutateur 31 et du contact fixe 85 du commutateur 77.

La came 74 effectue alors un demi-tour (dans le cas représenté à la figure). A la fin de ce demi-tour, le relais retombe grâce à la came qui actionne le contact 84 du commutateur 75, le deuxième contact 88 de ce même commutateur continuant à faire tourner le moteur 10 jusqu'à ce que la came soit dépassée.

On se retrouve alors dans la position initiale.

La came 74 est conformée de manière qu'elle actionne le commutateur 75 à chaque fois que l'appareil avance d'une distance légèrement inférieure à la largeur du suceur 30. Ainsi, le suceur travaille par bandes successives sensiblement perpendiculaires au mur ou à l'obstacle longé par l'appareil.

La figure 19 représente un exemple d'itinéraire susceptible d'être suivi par l'appareil.

Celui-ci commence par longer le mur 89 puis pivote autour de l'arête 90 constituée par exemple par le passage d'une porte (roue 3 dans la position de la figure 8). Il longe ensuite le mur 91 (fonctionnement décrit en référence aux figures 15 et 16) jusqu'à venir buter contre le mur perpendiculaire 92, tourner vers la gauche et se placer parallèlement à ce mur (fonctionnement figure 17). L'appareil progresse alors le long du mur 92, se déporte latéralement pour éviter l'obstacle 93 et pénètre en 94 dans l'impasse 95. Il se trouve alors en contact simultanément avec le mur 92 et la paroi 96 de l'obstacle 97. Il ressort de cette impasse, comme décrit en référence à la figure 18, puis progresse le long des parois de l'obstacle 97, et ainsi de suite.

Lors des arrêts provoqués par la came 74, l'appareil aspire par bande successive sur sa gauche, alors que pendant sa progression il aspire sous lui-même par l'intermédiaire de la fente 39.

On remarquera qu'en modifiant la position de l'inverseur 73, on pourrait faire suivre à l'appareil le trajet inverse de celui représenté à la figure 19, c'est-à-dire qu'il fonctionnerait "mur à gauche". Toutefois, le déploiement du tube 20 s'effectuant toujours sur la gauche de l'appareil, le centre de la pièce ne serait pas traité. Par contre, le suceur 30 se glisserait sous le meuble 97 ou au fond de l'impasse 95.

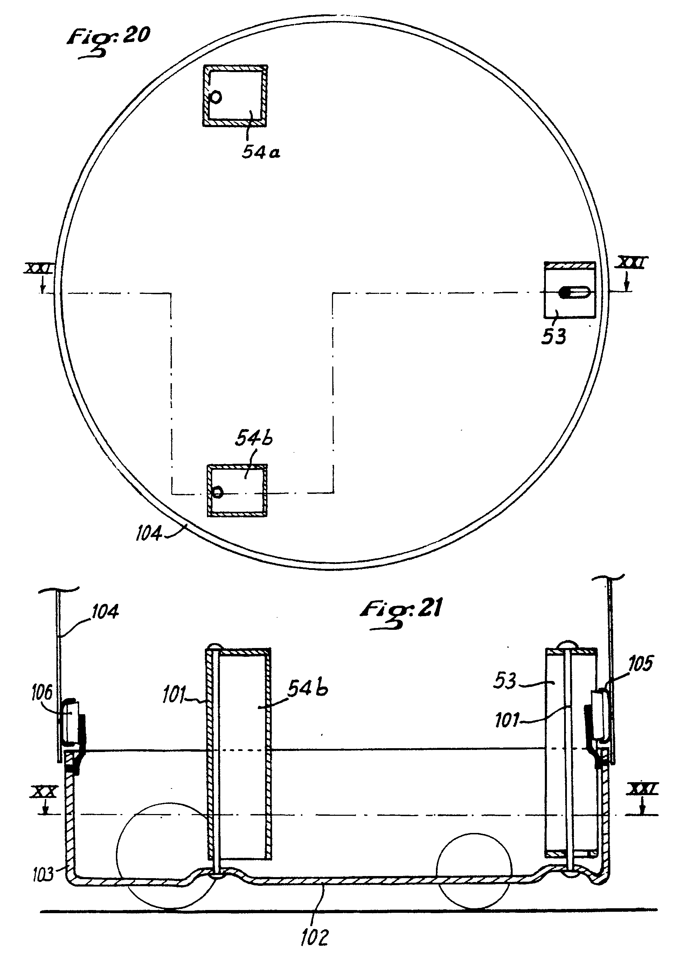

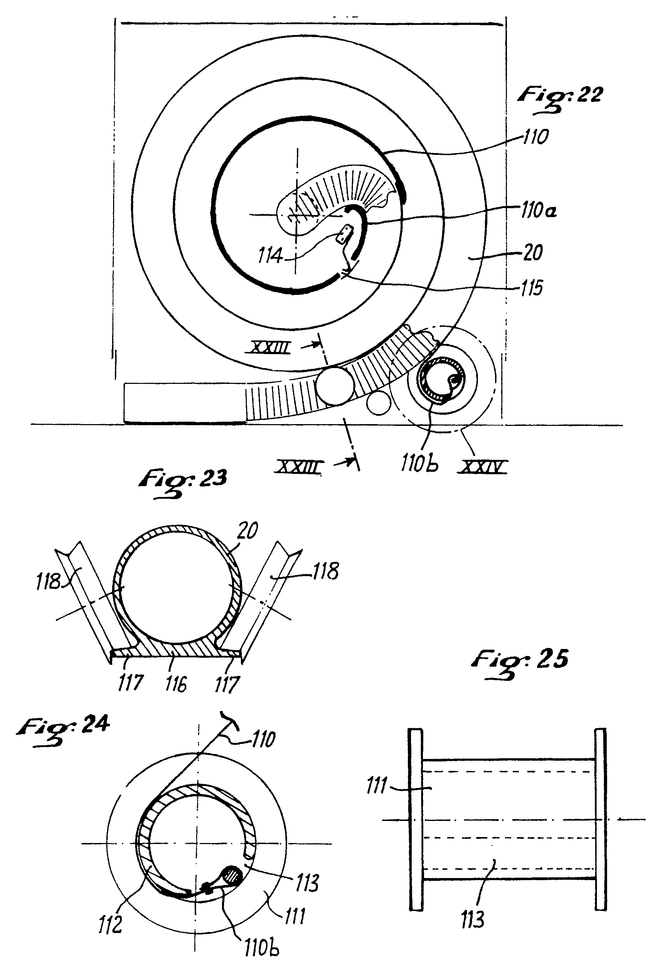

L'unité mobile des figures 20 et 21 comporte, également un châssis, dont seuls les organes de structure verticaux 53, 54a et 54b sont représentés.

Toutefois, alors que dans le mode de réalisation précédent, les tiges de liaison retenues dans ces tubes ont leur extrémité inférieure fixée au châssis, et leur extrémité supérieure libre, au contraire, dans le cas présent, les tiges 101 ont leur extrémité supérieure montée sur le châssis et leur extrémité inférieure libre et supportant un organe de manoeuvre 102 formant à sa périphérie un pare-chocs 103. Par conséquent, l'organe 102-103 est en fait suspendu au bâti par l'intermédiaire des tiges 101.

Par ailleurs, une enveloppe cylindrique 104 est montée à sa périphérie inférieure sur le bord supérieur du pare-chocs 103.

A cet effet, l'enveloppe 104 comporte un rail périphérique 105 dans lequel sont engagés des galets 106 montés sur le pare-chocs 103.

L'enveloppe cylindrique 104 n'a donc pas besoin de recouvrir la partie supérieure de l'unité mobile, de sorte que le capot supérieur de cette dernière est fixe.

Le fonctionnement de cette unité mobile est identique à celui décrit précédemment, si ce n'est qu'elle réagit aussi bien au contact avec un obstacle très bas du fait du pare-chocs 103. Pour un obstacle haut, la détection s'effectue à l'aide de l'enveloppe 104.

La figure 22 représente le tube d'aspiration 20 enroulé comme précédemment sur un enrouleur à axe horizontal.

Toutefois, une lame souple, par exemple métallique, 110 est enroulée avec le tube 20.

La bande 110 est fixée à une de ses extrémités 110a au moyeu 109 de l'enrouleur du tube 20, et à son autre extrémité 110b à un tambour 111 susceptible d'être entraîné à l'aide d'un moteur non représenté.

L'extrémité 110b est fixée au tambour 111 à l'intérieur de son moyeu 112 dans lequel elle pénètre par une fente 113.

Lorsque le moteur d'entraînement du tambour 111 démarre, la bande 110 s'enroule sur ce tambour et tire par conséquent sur l'enrouleur du tube 20 qui se déroule. Pendant ce déroulement, l'enrouleur tend un ressort de rappel (non représenté).

En fin de course, un interrupteur 114 coopérant avec un trou 115 dans le moyeu 109 de l'enrouleur provoque l'arrêt du moteur lorsque l'extrémité du tube 20 se décolle du moyeu. Le ressort de rappel réenroule alors le tube 20 à l'intérieur de l'appareil.

Le tube 20 peut présenter la section montrée à la figure 23 avec une semelle 116 formant deux bandes latérales en saillie 117 coopérant avec des galets de guidage 118 facilitant le réenroulement du tube sur son enrouleur.

On peut envisager d'autres applications de l'unité mobile, soit dans le domaine du nettoyage (cireuse, shampooineuse à moquette, etc...) soit dans d'autres domaines.

On peut en outre prévoir un contact à mercure qui couperait totalement l'alimentation électrique dans le cas où l'appareil se renverserait. On peut également prévoir un détecteur de niveau dans le cas où l'appareil est destiné à être utilisé dans un local comportant des différences de niveau ou des escaliers non protégés.

En outre, le tube d'aspiration peut être réalisé sous la forme d'une spirale élastique lui permettant de s'enrouler de lui-même autour de son axe.

## Revendications

1. Unité mobile, telle qu'un corps d'appareil de nettoyage, destinée à se déplacer en longeant des guides tels que des murs ou des obstacles, comprenant un châssis (1), des moyens (2) pour supporter ledit châssis sur le sol, au moins un organe (3) d'avance et de direction, des moyens d'entraînement (10) pour entraîner l'organe d'avance et de direction dans un sens prédéterminé de manière à provoquer l'avance de l'unité mobile, des moyens d'orientation (11) pour faire pivoter l'organe d'avance et de direction dans un sens ou dans l'autre autour d'un axe (5) sensiblement vertical, des moyens de détection (69) montés mobiles par rapport au châssis et des moyens de commande (58,63) pour lesdits moyens d'orientation, agencés pour faire pivoter l'organe d'avance et de direction, caractérisé par le fait que lesdits moyens de détection sont mobiles en translation dans un plan sensiblement horizontal par rapport audit châssis, et destinés à venir en appui sur lesdits guides et que l'organe d'avance et de direction pivote dans un premier sens en présence d'une réaction inférieure à un premier seuil prédéterminé exercée sur les moyens de détection depuis l'avant de l'unité mobile par rapport à sa direction générale d'avance (F1), et dans un deuxième sens en présence d'une telle réaction supérieure audit premier seuil.

2. Unité mobile selon la revendication 1, caractérisée par le fait que lesdits moyens de commande sont agencés pour inhiber les moyens d'orientation en présence d'une réaction sur les moyens de détection compris entre ledit premier seuil prédéterminé et un deuxième seuil prédéterminé.

3. Unité mobile selon l'une quelconque des revendications 1 et 2, caractérisée par le fait que lesdits moyens d'orientation comprennent un moteur électrique (11), et que lesdits moyens de commande comprennent un premier interrupteur (64,67) agencé pour commander la rotation du moteur électrique dans ledit premier sens, un deuxième interrupteur (64,68) agencé pour commander la rotation du moteur électrique dans ledit deuxième sens, et des moyens de transmission pour transmettre la réaction exercée sur lesdits moyens de détection à un organe d'actionnement (65) desdits interrupteurs.

4. Unité mobile selon la revendication 3, caractérisée par le fait que lesdits moyens de transmission comprennent un organe de manoeuvre (58) solidaire en translation horizontale desdits moyens de détection et susceptible de coulisser par rapport au châssis d'avant en arrière par rapport à la direction générale d'avance de l'unité mobile, d'une position avant où il enclenche ledit premier interrupteur à une position arrière où il enclenche ledit deuxième interrupteur, des moyens élastiques (66) étant prévus pour pousser ledit organe de manoeuvre vers sa position avant.

5. Unité mobile selon la revendication 4, caractérisée par le fait que ledit organe de manoeuvre comporte une structure triangulaire indéformable ayant son sommet (60) dirigé vers l'arrière, et sa base (62) dirigée vers l'avant et sensiblement perpendiculaire à la direction générale d'avance de l'unité mobile, les extrémités (61a,61b) de la base ayant leur mouvement limité vers l'avant et au moins partiellement libre vers l'arrière et vers les côtés, le sommet pouvant se déplacer d'avant en arrière, et ladite structure pouvant pivoter autour dudit sommet.

6. Unité mobile selon la revendication 5, caractérisée par le fait qu'elle comprend trois tiges (56,57a,57b) relativement souples sensiblement verticales, ayant chacune une de leurs extrémités montée sur le châssis, et leur autre extrémité montée respectivement au sommet et aux deux extrémités de la base de la structure triangulaire.

7. Unité mobile selon la revendication 6, caractérisée par le fait que chacune des tiges est engagée dans un tube de structure (53,54a,54b) monté sur ledit châssis, lesdits tubes ayant des dimensions intérieures largement supérieures au diamètre des tiges, et l'un au moins desdits tubes étant agencé pour supporter lesdits interrupteurs.

8. Unité mobile selon l'une quelconque des revendications 1 à 7, caractérisée par le fait que ledit organe d'avance et de direction est une roue avant ayant son axe (9) sensiblement horizontal et situé dans un plan décalé en arrière dudit axe vertical d'orientation lorsque la roue est dans sa position normale d'avance.

9. Unité mobile selon l'une quelconque des revendications 1 à 8, caractérisée par le fait que lesdits moyens de détection comprennent un capot cylindrique à axe vertical pivotant par rapport au châssis autour dudit axe.

10. Unité mobile selon l'ensemble de la revendication 9 et de l'une quelconque des revendications 4 à 7, caractérisée par le fait que ledit capot cylindrique est monté pivotant sur ledit organe de manoeuvre.

11. Unité mobile selon l'une quelconque des revendications 1 à 10, caractérisée par le fait qu'elle comprend un câble d'alimentation électrique (46), un enrouleur (50) pour ledit câble, une perche (48) dépassant de la surface supérieure de ladite unité et dont l'extrémité supérieure est agencée pour le passage dudit câble, et des moyens de guidage (48,49) pour guider le câble de l'extrémité de ladite perche audit enrouleur.

12. Appareil de nettoyage, tel qu'un aspirateur, caractérisé par le fait qu'il comporte un corps constitué d'une unité mobile selon l'une quelconque des revendications 1 à 11.

13. Appareil de nettoyage selon la revendication 12, caractérisé par le fait qu'il comprend un organe de nettoyage (30) tel qu'un suceur d'aspirateur, des moyens de balayage (19,20,27) pour déplacer ledit organe sur le sol sensiblement perpendiculairement à la direction générale d'avance de l'unité mobile de manière à balayer une bande de sol d'une largeur prédéterminée, et des moyens de démarrage et d'arrêt (74,75) pour provoquer l'avance de l'unité mobile sur une distance au plus égale à ladite largeur prédéterminée, son arrêt pendant le balayage de ladite bande au sol, et son redémarrage subséquent.

14. Appareil de nettoyage selon la revendication 13, caractérisé par le fait que les moyens d'arrêt et de démarrage comprennent une came (74) montée sur les moyens d'entraînement, susceptible de coopérer avec l'organe d'actionnement d'un commutateur (75) de commande d'un relais (76-79), ledit relais étant agencé pour alimenter sélectivement, soit les moyens d'entraînement et les moyens d'orientation, soit les moyens de balayage.

15. Appareil de nettoyage selon l'une quelconque des revendications 13 et 14, caractérisé par le fait que lesdits moyens d'arrêt et de démarrage et lesdits moyens de balayage sont agencés pour coopérer avec des interrupteurs de fin de course (32,34,35) pour provoquer le déploiement de l'organe de nettoyage lors de l'arrêt de l'unité mobile, pour provoquer son repliement lorsqu'il est arrivé en fin de course déployé, et pour provoquer le redémarrage de l'unité mobile lorsque l'organe de nettoyage est arrivé en fin de course replié.

16. Appareil de nettoyage selon l'une quelconque des revendications 13 à 15, caractérisé par le fait que lesdits moyens de balayage comprennent un tube (20) semi-rigide susceptible de s'enrouler vers le haut dans un plan sensiblement vertical, un enrouleur (19) disposé dans ledit plan, et des moyens de déroulement et d'enroulement (23,27) dudit tube sur ledit enrouleur, ledit organe de nettoyage étant monté à l'extrémité libre dudit tube.

17. Appareil de nettoyage selon la revendication 16, caractérisé par le fait que lesdits moyens de déroulement et d'enroulement comprennent une bande sans fin (23) motorisée et munie de picots (24) à sa surface extérieure, lesdits picots étant agencés pour coopérer avec des trous (25) formés à la surface extérieure dudit tube.

18. Aspirateur selon l'une quelconque des revendications 13 à 17, caractérisé par le fait qu'il comporte, à la partie inférieure de l'unité mobile, une trémie (36) munie d'une première fente (39) transversale à la direction générale d'avance à proximité du sol, et d'une deuxième fente contre laquelle s'applique l'orifice (40) du suceur lorsque ce dernier est en position repliée.

19. Unité mobile selon l'une quelconque des revendications 4 à 7, caractérisée par le fait que les moyens de détection comprennent un pare-chocs (103) disposé à la périphérie inférieure de l'unité et constituant ledit organe de manoeuvre.

20. Unité mobile selon la revendication 19, caractérisée par le fait que les moyens de détection comprennent en outre une enveloppe cylindrique (104) à axe sensiblement vertical, montée pivotante le long de sa périphérie inférieure sur ledit pare-chocs.

21. Appareil de nettoyage selon la revendication 16, caractérisé par le fait que lesdits moyens de déroulement et d'enroulement comprennent une bande souple (110) fixée à une de ses extrémités audit enrouleur, et à son autre extrémité à un tambour motorisé (111).

22. Appareil selon la revendication 21, caractérisé par le fait que ladite bande souple est enroulée sur l'enrouleur, superposée audit tube.

**Claims**

1. Movable unit, such as a cleaning apparatus, intended to move by running along guides such as walls or obstacles, comprising a chassis (1), means (2) for supporting the said chassis on the ground, at least one advancing and steering member (3), drive means (10) for driving the advancing and steering member in a predetermined direction so as to cause the movable unit to advance, orientation means (11) for pivoting the advancing and steering member in one or other direction about a substantially vertical axis (5), detection means (69) mounted so as to be able to move with respect to the chassis, and control means (58, 63) for the said orientation means, arranged in order to pivot the advancing and steering member, characterised in that the said detection means can move in translational movement in a plane substantially horizontal with respect to the said chassis, and are intended to bear on the said guides, and in that the advancing and steering member pivots in a first direction in the presence of a reaction force, below a first predetermined threshold, exerted on the detection means from the front of the movable unit with respect to its general direction of advance (F1), and in a second direction in the presence of such a reaction force above the said first threshold.

2. Movable unit according to Claim 1, characterised in that the said control means are arranged in order to inhibit the orientation means in the presence of a reaction force on the detection means lying between the said first predetermined threshold and a second predetermined threshold.

3. Movable unit according to either of Claims 1 and 2, characterised in that the said orientation means comprise an electric motor (11), and in that the said control means comprise a first switch (64, 67) arranged in order to control the rotation of the electric motor in the said first direction, a second switch (64, 68) arranged in order to control the rotation of the electric motor in the said second direction, and transmission means for transmitting the reaction force exerted on the said detection means to a member (65) for actuating the said switches.

4. Movable unit according to Claim 3, characterised in that the said transmission means comprise an operating member (58) integral in horizontal translational movement with the said detection means and capable of sliding, with respect to the chassis, in a backwards direction with respect to the general direction of advance of the movable unit, from a forward position in which it triggers the said first switch to a rear position in which it triggers the said second switch, elastic means, (66) being provided in order to push the said operating member towards its forward position.

5. Movable unit according to Claim 4, characterised in that the said operating member comprises an undeformable triangular structure having its peak (60) pointing backwards, and its base (62) pointing forwards and substantially perpendicular to the general direction of advance of the movable unit, the ends (61a, 61b) of the base having their forward movement limited and their backward and sideways movement at least partially free, it being possible for the peak to move backwards and it being possible for the said structure to pivot about the said peak.

6. Movable unit according to Claim 5, characterised in that it comprises three substantially vertical, relatively flexible rods (56, 57a, 57b), each having one of their ends mounted on the chassis and their other end mounted respectively at the peak and at the two ends of the base of the triangular structure.

7. Movable unit according to Claim 6, characterised in that each of the rods is engaged in a structural tube (53, 54a, 54b) mounted on the said chassis, the said tubes having internal dimensions which are considerably greater than the diameter of the rods, and at least one of the said tubes being arranged in order to support the said switches.

8. Movable unit according to any one of Claims 1 to 7, characterised in that the said advancing and steering member is a front wheel having its axis (9) substantially horizontal and situated in a plane offset to the rear of the said vertical axis of orientation when the wheel is in its normal advancing position.

9. Movable unit according to any one of Claims 1 to 8, characterised in that the said detection means comprise a cylindrical cover with a vertical axis and which pivots with respect to the chassis about the said axis.

10. Movable unit according to Claim 9 taken together with any one of Claims 4 to 7, characterised in that the said cylindrical cover is mounted so as to pivot on the said operating member.

11. Movable unit according to any one of Claims 1 to 10, characterised in that it comprises an electrical-supply cable (46), a reel (50) for the said cable, a pole (48) protruding from the upper surface of the said unit and the upper end of which is designed far the passage of the said cable, and guide means (48, 49) for guiding the cable from the end of the said pole to the said reel.

12. Cleaning apparatus, such as a vacuum cleaner, characterised in that it comprises a body consisting of a movable unit according to any one of Claims 1 to 11.

13. Cleaning apparatus according to Claim 12, characterised in that it comprises a cleaning member (30) such as a vacuum cleaner suction device, sweeping means (19, 20, 27) for moving the said member over the ground essentially perpendicular to the general direction of advance of the movable unit so as to sweep a strip of ground of a predetermined width, and starting and stopping means (74, 75) for causing the movable unit to advance over a distance no greater than the said predetermined width, to stop during the sweeping of the said strip of ground and subsequently to start up again.

14. Cleaning apparatus according to Claim 13, characterised in that the starting and stopping means comprise a cam (74) mounted on the driving means and capable of interacting with the actuating member of a commutator (75) controlling a relay (76-79), the said relay being arranged in order to supply selectively either the drive means and the orientation means, or the sweeping means.

15. Cleaning apparatus according to either of Claims 13 and 14, characterised in that the starting and stopping means and the said sweeping means are arranged in order to interact with end-of-travel switches (32, 34, 35) in order to cause the cleaning member to be extended when the movable unit stops and in order to cause it to be retracted when it reaches the end of its travel in the extended state, and in order to cause the movable unit to start up again when the cleaning member reaches the end of its travel in the retracted state.

16. Cleaning apparatus according to anyone of Claims 13 to 15, characterised in that the said sweeping means comprise a semi-rigid tube (20) capable of being wound upwards in a substantially vertical plane, a reel (19) arranged in the said plane and means (23, 27) for unwinding and winding up the said tube on the said reel, the said cleaning member being mounted at the free end of the said tube.

17. Cleaning apparatus according to Claim 16, characterised in that the unwinding and winding-up means comprise a motor-driven endless belt (23) equipped with spikes (24) on its outer surface, the said spikes being arranged in order to interact with holes (25) formed in the outer surface of the said tube.

18. Vacuum cleaner according to any one of Claims 13 to 17, characterised in that it comprises, in the lower part of the movable unit, a funnel (36) provided with a first slot (39) transverse to the general direction of advance close to the ground, and with a second slot against which the orifice (40) of the suction device is applied when the latter is in the retracted position.

19. Movable unit according to any one of Claims 4 to 7, characterised in that the detection means comprise a bumper (103) arranged at the lower periphery of the unit and constituting the said operating member.

20. Movable unit according to Claim 19, characterised in that the detection means furthermore comprise a cylindrical casing (104) with a substantially vertical axis and mounted so as to pivot along its lower periphery on the said bumper.

21. Cleaning apparatus according to Claim 16, characterised in that the said unwinding and winding-up means comprise a flexible belt (110) fixed at one of its ends to the said reel and at its other end to a motor-driven drum (111).

22. Apparatus according to Claim 21, characterised in that the said flexible belt is wound onto the reel, superposed on the said tube.

**Ansprüche**

1. Bewegliche Einheit, wie etwa der Korpus eines Reinigungsapparates, die bestimmt ist. sich entlang Führungen, wie etwa Mauern oder Hindernissen zu bewegen, mit einem Fahrgestell (1), Einrichtungen (2) zur Abstützung des Fahrgestells auf dem Boden, wenigstens einem Organ (3) zum Bewegen und zur Richtungsänderung, Antriebseinrichtungen (10) zum Antrieben des Organs zum Bewegen und zur Richtungsänderung durch Auslösen der Bewegung der beweglichen Einheit, Einrichtungen (11) zur Orientierung zum Schwenken des Organs zum Bewegen und zur Richtungsänderung in dem einen oder anderen Sinne um eine Im wesentlichen senkrechte Achse (5). Abtasteinrichtungen (69), die beweglich in bezug auf das Fahrgestell montiert sind. und Steuereinrichtungen (68.63) für die Orientierungseinrichtungen, die das Organ zum Bewegen und zur Richtungsänderung schwenken. dadurch **gekennzeichnet**, daß die Abtasteinrichtungen in einer im wesentlichen waagerechten Ebene in bezug auf das Fahrgestell beweglich sind und bestimmt sind, gegen die Führungen zu stoßen, und daß das Organ zum Bewegen und zur Richtungsänderung in einem ersten Sinne schwenkt, wenn eine Reaktion unterhalb eines ersten Schwellenwertes auf die Abtasteinrichtungen von vorne auf die bewegliche Einheit in bezug auf die Hauptbewegungsrichtung (F1) ausgeübt wird, und in einem zweiten Sinne, wenn eine Reaktion oberhalb des ersten Schwellenwertes vorliegt.

2. Bewegliche Einheit nach Anspruch 1, dadurch **gekennzeichnet**, daß die Steuereinrichtungen derart ausgebildet sind, daß sie die Orientierungseinrichtungen in Gegenwart einer Reaktion auf die Abtasteinrichtungen zwischen dem ersten vorgegebenen Schwellenwert und einem zweiten vorgegebenen Schwellenwert behindern.

3. Bewegliche Einheit nach Anspruch 1 oder 2, dadurch **gekennzeichnet**, daß die Orientierungseinrichtungen einen Elektromotor (11), und daß die Steuereinrichtungen einen ersten Schalter (64,67) zur Steuerung der Drehung des Elektromotors in einem ersten Sinne und einen zweiten Schalter (64,68) zur Steuerung der Drehung des Elektromotors im zweiten Sinne sowie Einrichtungen zur Übertragung der auf die Abtasteinrichtungen ausgeübten Reaktion auf ein Betätigungsorgan (65) der Schalter umfaßt.

4. Bewegliche Einheit nach Anspruch 3. dadurch **gekennzeichnet**, daß die Übertragungseinrichtungen ein Betätigungsorgan (58) umfassen, das für eine waagerechte Bewegung mit den Abtasteinrichtungen verbunden ist und in bezug auf das Fahrgestell von vorne nach hinten, bezogen auf die generelle Bewegungsrichtung der beweglichen Einheit, verschiebbar ist aus einer vorderen Position, in der es den ersten Schalter einchaltet, in eine hintere Position, in der es den zweiten Schalter einschaltet, wobei elastische Einrichtungen (66) vorgesehen sind, die das Betätigungsorgan in die vordere Position schieben.

5. Bewegliche Einheit nach Anspruch 4, dadurch **gekennzeichnet**, daß das Betätigungsorgan als steifes Dreieck ausgebildet ist, dessen Spitze (80) nach hinten gerichtet ist und dessen Grundlinie (62) vorne liegt und im wesentlichen senkrecht zur allgemeinen Bewegungsrichtung der beweglichen Einheit verläuft, wobei die Enden (61a,61b) der Grundlinie eine begrenzte Bewegungsmöglichkeit nach vorne haben und wenigstens teilweise nach hinten und zu den Seiten frei beweglich sind, wobei die Spitze sich von vorne nach hinten bewegen und das Dreieck um seine Spitze schwenken kann.

6. Bewegliche Einheit nach Anspruch 5, dadurch **gekennzeichnet**, daß sie drei relativ biegsame, im wesentlichen senkrechte Stangen (56,57a,57b) umfaßt, die jeweils mit einem Ende am Fahrgestell und am anderen Ende an der Spitze und den beiden Enden der Grundlinie des Dreiecks befestigt sind.

7. Bewegliche Einheit nach Anspruch 6, dadurch **gekennzeichnet**, daß jede der Stangen in einem Rohr (53,54a,54b) liegt, das auf dem Fahrgestell montiert ist, daß die Rohre innen Abmessungen aufweisen, die wesentlich größer sind als der Durchmesser der Stangen, und von denen wenigstens eines die Schalter trägt.

8. Bewegliche Einheit nach einem der Ansprüche 1 bis 7, dadurch **gekennzeichnet**, daß das Bewegungs- und Richtungsänderungsorgan ein Rad ist, dessen Achse (9) im wesentlichen waagerecht verläuft und in einer Ebene liegt. die nach hinten In bezug auf die senkrechte Richtungsachse versetzt ist, wenn das Rad in seiner normalen Bewegungsposition steht.

9. Bewegliche Einheit nach einem der Ansprüche 1 bis 8, dadurch **gekennzeichnet**, daß die Abtasteinrichtungen eine zylindrische Kappe mit senkrechter Achse umfassen, die in bezug auf das Fahrgestell um die genannte Achse schwenkbar ist.

10. Bewegliche Einheit nach Anspruch 9 und einem der Ansprüche 4 bis 7, dadurch **gekennzeichnet**, daß die zylindrische Kappe schwenkbar an dem Betätigungsorgan angebracht ist.

11. Bewegliche Einheit nach einem der Ansprüche 1 bis 10, dadurch **gekennzeichnet**, daß sie ein Stromversorgungskabel (46), eine Aufrolleinrichtung (50) für das Kabel, ein Rohr (48), das von der oberen Oberfläche der Einheit ausgeht und dessen oberes Ende für den Durchgang des Kabels ausgebildet ist, und Führungseinrichtungen (48,49) zum Führen des Kabels vom Ende des Rohres zur Aufrolleinrichtung umfaßt.

12. Reinigungsvorrichtung, wie etwa Staubsauger, dadurch **gekennzeichnet**, daß sie einen Korpus umfaßt, der durch eine bewegliche Einheit gemäß einem der Ansprüche 1 bis 11 gebildet wird.

13. Reinigungvorrichtung nach Anspruch 12, dadurch **gekennzeichnet**, daß sie ein Reinigungsorgan (30), wie etwa einen Saugkopf eines Staubsaugers, Kehreinrichtungen (19,20,27) zum verschieben des Organs über den Boden im wesentlichen senkrecht zur allgemeinen Bewegungsrichtung der beweglichen Einheit, derart, daß ein Streifen des Bodens mit einer vorgegebenen Breite gereinigt wird, und eine Einrichtung zum Starten und Anhalten (74,75) zum Auslösen der Bewegung der beweglichen Einheit über eine Strecke, die höchstens so groß ist wie die vorgegebene Breite, zum Anhalten während der Reinigung des Streifens des Bodens und zum erneuten Anfahren umfaßt.

14. Reinigungsvorrichtung nach Anspruch 13, dadurch **gekennzeichnet**, daß die Einrichtungen zum Anhalten und zum erneuten Anfahren einen Nocken (74) umfassen, der an den Antriebseinrichtungen angebracht ist und mit einem Betätigungsorgan eines Umschalters (75) zusammenwirkt, der ein Relais (76 bis 79) schaltet, welches Relais derart ausgebildet ist, daß es selektiv die Antriebseinrichtungen und die Orientierungseinrichtungen oder die Reinigungseinrichtungen versorgt.

15. Reinigungsvorrichtung nach einem der Ansprüche 13 und 14, dadurch **gekennzeichnet**, daß die Einrichtungen zum Anhalten und zum erneuten Anfahren und die Reinigungseinrichtungen mit Endschaltern (32,34,35) zusammenwirken, die das Reinigungsorgan abschalten, während die bewegliche Einheit anhält, deren Umkehr bewirkt, wenn die Einheit am Ende eines vorgegebenen Kurses angekommen Ist und die bewegliche Einheit wieder in Gang setzt, wenn das Reinigungsorgan am Ende des hin und her gehenden Kurses angekommen ist.

16. Reinigungsvorrichtung nach einem der Ansprüche 13 bis 15, dadurch **gekennzeichnet**, daß die Kehreinrichtungen ein halbstarres Rohr (20), daß nach oben In einer im wesentlichen senkrechten Ebene aufrollbar ist, eine Aufrolleinrichtung (19) in der Ebene, und Einrichtungen zum Abrollen und Aufrollen (23,27) des Rohres in bezug auf die Aufrolleinrichtung umfaßt, welches Reinigungsorgan am freien Ende des Rohres angebracht ist.

17. Reinigungsvorrichtung nach Anspruch 16, dadurch **gekennzeichnet**, daß die Einrichtungen zum Abrollen und Aufrollen ein endloses, angetriebenes Band (23) mit Spitzen (24) auf der äußeren Oberfläche umfaßt, welche Spitzen mit Löchern (25) in der äußeren Oberfläche des Rohres zusammenwirken.

18. Staubsauger nach einem der Ansprüche 13 bis 17, dadurch **gekennzeichnet**, daß er im unteren Bereich der beweglichen Einheit eine Kammer (36) mit einem Schlitz (39) aufweist, der quer zur Hauptbewegungsrichtung in der Nähe des Bodens verläuft, und mit einem zweiten Schlitz, gegen den sich die Öffnung (40) des Saugers anlegt, wenn dieser in der zurückgenommenen Stellung steht.

19. Bewegliche Einheit nach einem der Ansprüche 4 bis 7, dadurch **gekennzeichnet**, daß die Abtasteinrichtungen einen Stoßdämpfer (103) umfassen, der sich am äußeren Umfang der Einheit befindet und das Betätigungsorgan bildet.

20. Bewegliche Einheit nach Anspruch 19, dadurch **gekennzeichnet**, daß die Abtasteinrichtungen im übrigen eine zylindrische Hülle (104) mit im wesentlichen senkrechter Achse umfassen, die schwenkbar entlang dem unteren Umfang des Stoßdämpfers montiert ist.

21. Reinigungsvorrichtung nach Anspruch 16, dadurch **gekennzeichnet**, daß die Einrichtungen zum Abrollen und Aufrollen ein weiches Band (110) umfassen, das an einer seiner Enden an der Aufrolleinrichtung und am anderen Ende an einer motorgetriebenen Trommel (111) befestigt ist.

22. Reingungsvorrichtung nach Anspruch 21, dadurch **gekennzeichnet**, daß das weiche Band auf die Aufrolleinrichtung über dem Rohr aufgerollt ist.

*Fig.1*

## Fig. 2

Fig.3

Fig.4

F1

18

*Fig. 5*

*Fig. 7*

*Fig. 6*

*Fig. 8*

## Fig. 9

## Fig. 10

## Fig. 11

*Fig. 12*

Fig. 13

Fig. 14

Fig. 15

Fig. 17

Fig. 16

Fig. 18

Fig. 19

Fig. 20

Fig. 21

Fig. 22

Fig. 23

Fig. 24

Fig. 25